# EUROPEAN PATENT APPLICATION

(11) **EP 4 398 076 A1**
(43) Date of publication of application: **10.07.2024**
(21) Application number: 23190204.0
(22) Date of filing: 08.08.2023
(51) Int. Cl.: G06F 3/01, G06F 3/0481

(54) **NOTIFICATION DISPLAYING METHOD AND APPARATUS, AND COMPUTER-READABLE STORAGE MEDIUM**

(30) Priority: 06.01.2023 CN 202310020812
(71) Applicant: Beijing Xiaomi Mobile Software Co., Ltd., Beijing 100085 (CN)
(72) Inventor: YU, Xing, Beijing 100085 (CN)
(74) Representative: dompatent von Kreisler Selting Werner - Partnerschaft von Patent- und Rechtsanwälten mbB

(57) **Abstract**

The present invention relates to the field of terminal technologies, and specifically provides a notification displaying method and apparatus, a device, and a computer-readable storage medium. The method is executed by a terminal in which a front image acquisition device is disposed, the method includes: acquiring (S101) an image through the front image acquisition device when notification of a received message is displayed; determining (S102) a gaze area of a user's line of sight in the acquired image; and processing (S103) a first area of the notification if the gaze area is within the first area, wherein modes of the processing include expanding the first area and/or displaying a specific content of the message in the first area.

## Description

### TECHNICAL FIELD

The present invention relates to the field of terminal technologies, and more specifically, to a notification displaying method, a notification displaying apparatus, and a computer-readable storage medium.

### BACKGROUND

When a user uses a terminal for work or entertainment, if the terminal receives a message, a notification can be popped up at the upper end of the display screen to briefly describe the message.

In the related technologies, the user can realize jumping from a current page to a page of an application corresponding to the message by pulling down or clicking on the notification, or make the message present the specific content on the current page in a form of a floating window. It can be seen that in the related technologies, in order to view the message, the user must rely on a manual operation to realize processing on the notification.

### SUMMARY

In order to overcome the problems existing in the related technologies, the present invention provides a notification displaying method, a notification displaying apparatus, an electronic device, and a computer-readable storage medium.

According to a first aspect of the present invention, there is provided a notification displaying method, executed by a terminal in which a front image acquisition device is disposed, the method including: acquiring an image through the front image acquisition device when notification of a received message is displayed; determining a gaze area of a user's line of sight in the acquired image; and processing a first area of the notification if the gaze area is within the first area, wherein modes of the processing include expanding the first area and/or displaying a specific content of the message in the first area.

According to a second aspect of the present invention, there is provided a notification displaying apparatus, applied to a terminal in which a front image acquisition device is disposed, the apparatus comprising: an acquiring module configured to acquire an image through the front image acquisition device when the terminal displays a notification of a received message; a determining module configured to determine a gaze area of a user's line of sight in the acquired image; and a processing module configured to process a first area of the notification when the gaze area is within the first area, wherein modes of the processing include expanding the first area and/or displaying a specific content of the message in the first area.

According to a third aspect of the present invention, there is provided a computer-readable storage medium, having stored thereon a computer program, which, when executed by a processor, implements the notification displaying method according to the first aspect of the present invention.

The present invention includes the following beneficial effects:
by determining the gaze area of the user's line of sight in the acquired image according to the present invention, it is enabled for the terminal to take the gaze of the user's line of sight on the screen as input information without a manual operation, thereby realizing a further processing on the notification of the message based on the input information, such that the user does not need to manually process the notification. As a result, the user can conveniently process the notification of the message even when it is inconvenient to manually process the notification.

It is to be understood that both the foregoing general description and the following detailed description are exemplary and explanatory only and are not restrictive of the present invention.

### BRIEF DESCRIPTION OF THE DRAWINGS

The accompanying drawings, which are incorporated in and constitute a part of the description, illustrate exemplary embodiments consistent with the present invention and, together with the description, serve to explain the principles of the present invention.
FIG. 1 is a flowchart of a notification displaying method according to an exemplary embodiment of the present invention.
FIG. 2A is a schematic diagram of a notification according to an exemplary embodiment of the present invention.
FIG. 2B is a schematic diagram of a notification according to an exemplary embodiment of the present invention.
FIG. 3A is a schematic diagram of a processing mode for a first area according to an exemplary embodiment of the present invention.
FIG. 3B is a schematic diagram of a processing mode for a first area according to an exemplary embodiment of the present invention.
FIG. 4 is a schematic diagram of a first area including a buffer area according to an exemplary embodiment of the present invention.
FIG. 5 is a schematic diagram of a first area including a buffer area according to an exemplary embodiment of the present invention.
FIG. 6A is a schematic diagram of a gaze area according to an exemplary embodiment of the present invention.
FIG. 6B is a schematic diagram of a gaze area according to an exemplary embodiment of the present invention.
FIG. 7 is a flowchart of a notification displaying method according to an exemplary embodiment of the present invention.
FIG. 8 is a flowchart of a notification displaying method according to an exemplary embodiment of the present invention.
FIG. 9 is a flowchart of a notification displaying method according to an exemplary embodiment of the present invention.
FIG. 10 is a schematic block diagram of an apparatus for notification displaying according to an exemplary embodiment of the present invention.
FIG. 11 is a schematic block diagram of an apparatus for notification displaying according to an exemplary embodiment of the present invention.

### DETAILED DESCRIPTION

Description will now be made in detail to exemplary embodiments, examples of which are illustrated in the accompanying drawings. The following description refers to the accompanying drawings in which the same numbers in different drawings represent the same or similar elements unless otherwise indicated. The implementations in the following description of exemplary embodiments do not represent all implementations consistent with the present invention. Instead, they are merely examples of apparatuses and methods consistent with some aspects of the present invention as detailed in the appended claims.

The terminology used in the present invention is for the purpose of describing specific embodiments only and is not intended to limit the present invention. The singular forms "a", "said" and "the" used in the present invention and the appended claims are also intended to include the plural forms, unless the context clearly indicates other meaning. It should also be understood that the term "and/or" as used herein refers to and includes any or all possible combinations of one or more associated listed items.

It should be understood that although the terms "first", "second", "third", etc. can be used to describe various types of information in the present invention, these information should not be limited to these terms. These terms are only used to distinguish the same type of information from each other. For example, without departing from the scope of the present invention, the first information can also be called the second information, and similarly, the second information can also be called the first information. Depending on the context, the word "if' as used herein can be interpreted as "when..." or "at the time of..." or "in response to a determination".

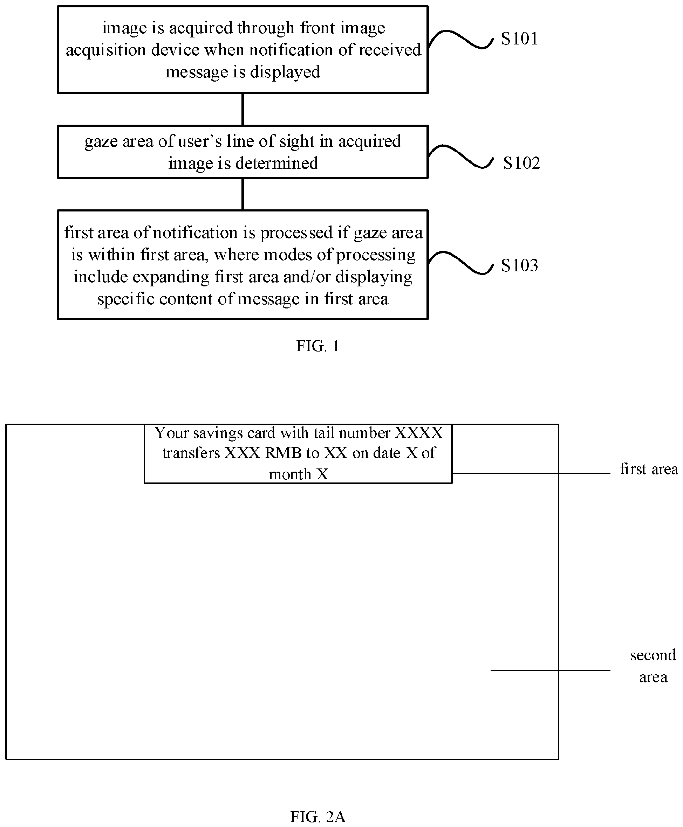

FIG. 1 is a schematic flowchart of a notification displaying method according to an embodiment of the present invention, the method is executed by a terminal, the terminal can be a mobile phone, a tablet, a notebook computer, etc., and a front image acquisition device is disposed in the terminal. In an embodiment, the front image acquisition device is disposed at an upper end of a display screen of the terminal. The notification displaying method includes:
in step S101, an image is acquired through the front image acquisition device when a notification of a received message is displayed;
in step S102, a gaze area of a user's line of sight in the acquired image is determined; and
in step S103, a first area of the notification is processed if the gaze area is within the first area, wherein modes of the processing include expanding the first area and/or displaying a specific content of the message in the first area.

The message can be any message received by the terminal, for example, it can be a message from any application such as an instant messaging application, a message from the system, a short message, etc.

The terminal can generate a notification of a message for the received message, for example, it can obtain part of the text in the message as a notification, for example, it can generate a notification according to parameters such as the source and the number of messages.

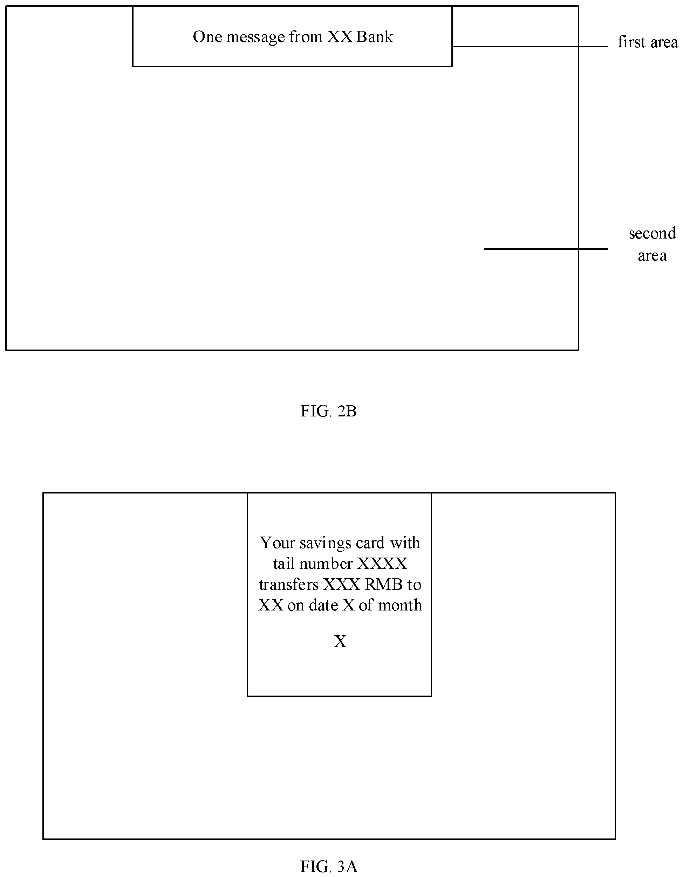

FIG. 2A is a schematic diagram of a notification according to an embodiment of the present invention. FIG. 2B is a schematic diagram of another notification according to an embodiment of the present invention. As shown in FIG. 2A, the terminal obtains part of the text in a message of an application as a notification when the terminal receives the message, and the notification area in the figure is the first area. As shown in FIG. 2B, the terminal obtains the source and the number of messages to generate a notification when the terminal receives a message of an application, and the notification area in the figure is the first area.

The terminal can continuously perform image acquisition through the front image acquisition device when the terminal displays the notification on the current page, so as to continuously determine the gaze area of the user's line of sight through the acquired images subsequently, to realize the corresponding operation based on the change of the gaze area of the user's line of sight.

The terminal can implement the notification displaying method proposed in the present invention when the user enables a notification displaying function in advance; and the terminal can enable and execute the notification displaying method proposed in the present invention with respect to any received message.

The user can choose whether to enable the notification displaying function according to his/her current requirements, for example, the user can enable the notification displaying function before dish washing so as to process the message received by the terminal in time during dish washing, and disable the notification displaying function when the user can manually operate at any time after dish washing.

The terminal can determine the current running application, enable and execute the notification displaying method proposed by the present invention if it is determined that the current running application is an application with respect to which it is inconvenient to manually operate a notification.

For example, the current running application is an application of video, game, document input, video conference etc. that may occupy the user's hands, making it difficult for the user to perform a manual operation while using the aforesaid application, in this case, using the notification displaying method proposed in the present invention can bring convenience to the user and make the user have a pleasant experience.

It can be seen that according to the present invention, by determining the gaze area of the user's line of sight in the acquired image, the terminal can regard the gaze of the user's line of sight on the screen as input information without a manual operation, thereby realizing a further processing on the notification of the message based on the input information without manually processing the notification by the user. As a result, the user can also conveniently process the notification of the message when it is inconvenient to manually process the notification.

The user can also classify applications that send messages, so as to select that the terminal will use the notification displaying method merely when it receives a message of a first classified application, or select that the terminal will not use the notification displaying method when it receives a message of a second classified application.

By classifying applications, the user can put the applications that may send messages in which the user is interested into the first category, such as instant messaging applications, and put the applications that may send harassing messages in which the user is not interested into the second category, such as the applications that often send advertising messages. By classifying the applications, the user sets in advance the applications that can send messages in which the user are interested, such that the notification displaying method disclosed by the present invention can be more targeted and will not bring troubles to the user due to false triggering.

The terminal can determine the user's face information in the acquired image through a face detection algorithm after the terminal obtains the image acquired by the front image acquisition device, determine key points of human eyes according to the face information, and finally estimate the user's gaze area by using a first set of gaze area classification algorithm trained in advance.

It should be noted that different terminals have different display screen sizes, and the parameters and location of the front image acquisition device are different, thus it is necessary to carry out customized training data collection and algorithm development for different terminals to train the gaze area classification algorithm for different terminals. The gaze area of the user's line of sight determined by the aforesaid algorithm is relatively wide, which is more accurate and real-time than the conventional gaze position regression algorithm.

The terminal can select the corresponding gaze area classification algorithm according to a display direction of the current page, such that the notification displaying method disclosed by the present invention can adapt to the flipping of the terminal, and the terminal can determine the gaze area of the user's line of sight in the acquired image based on the corresponding gaze area classification algorithm in a portrait screen state or a landscape screen state.

Generally, the notification of the message appears at the upper end of the current page when the terminal is in the portrait screen state, the front image acquisition device is also located at the upper end of the terminal, and the gaze area of the user's line of sight is determined by the corresponding gaze area classification algorithm in the portrait screen state; and the terminal is placed in a lateral direction when the user is using part of the applications or functions of the terminal, such that the current page is displayed in a landscape screen direction, in this case, the gaze area of the user is determined by the gaze area classification algorithm of the corresponding landscape screen state.

At least one of the following processes can be performed on the first area of the notification if the gaze area is within the first area of the notification, such that the user can further acquire content of the notification without relying on two hands:

The terminal can expand the notification area, and further, can make the user read more easily by enlarging the font size. For example, as shown in FIG. 3A, the terminal expands the notification area shown in FIG. 2A, and the font size is also enlarged, such that the user can get a more relaxed reading experience and can recognize the content of the notification more quickly and simply.

The terminal can further display the specific content of the message in the notification area, the notification can only display the source and the number of messages, for example, the notification shown in FIG. 2B is "One message from XX Bank", and after the terminal processes it, the specific content of the message can be displayed, such as "Your savings card with tail number XXXX transfers XXX RMB to XX on the date X of month X", as shown in FIG. 2A.

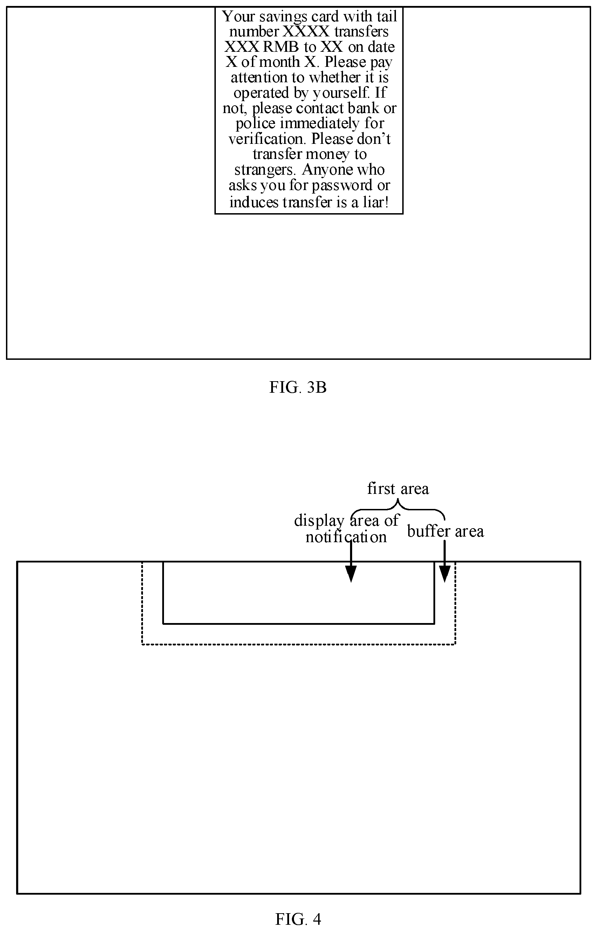

On the one hand, the terminal can expand the notification area, on the other hand, the terminal can simultaneously make the notification further display the specific or complete content of the message, or jump to the floating window of the message. The user can expand the notification area shown in FIG. 2A and display the complete content of the message, for example, as shown in FIG. 3B, by merely gazing at it through the line of sight without performing a manual operation to facilitate the user acquiring the message.

When the gaze area of the user's line of sight is within the first area of the notification, that is, the user is gazing at the notification, it indicates that the user is interested in the content of the notification, while the notification generally displays only a limited part of the content, such that expanding the first area and/or displaying the specific content of the message can enable the user to further obtain the specific content of the message.

FIG. 4 is a schematic diagram of a buffer area according to an embodiment of the present invention.

The first area can include a display area of the notification, or the first area can also include a display area of the notification and a buffer area around the display area.

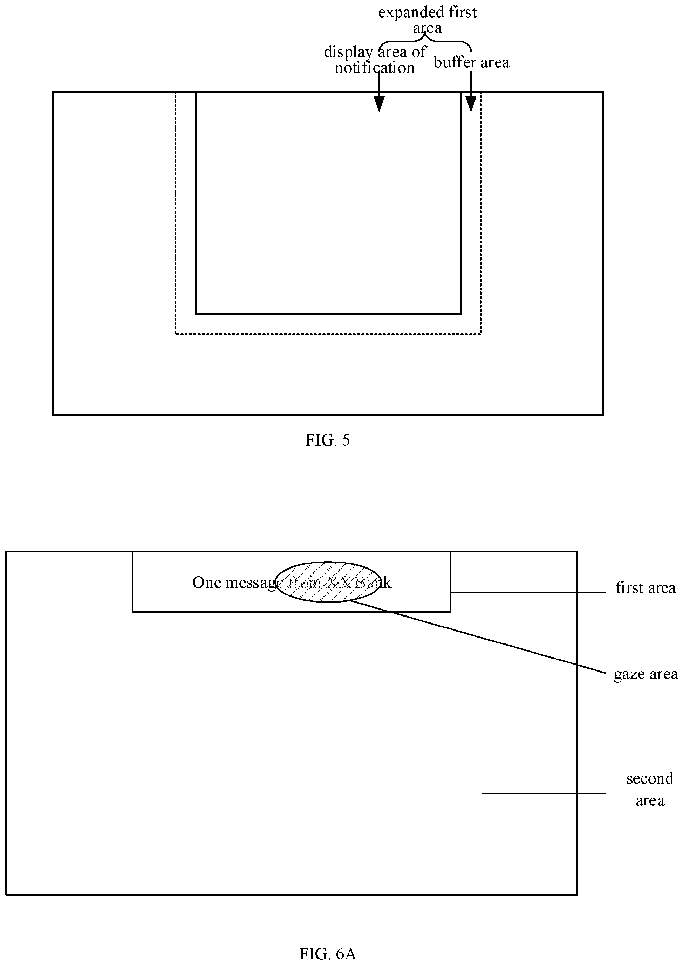

For example, as shown in FIG. 4, the solid line represents the display area of the notification, and the area between the dotted line and the solid line frame is the buffer area around the display area. The expanded first area can also include the buffer area, as shown in FIG. 5.

The above-described processing on the first area is all performed when the terminal determines that the gaze area of the user's line of sight is within the first area, and the buffer area can increase the robustness of the gaze area classification algorithm and improve the fault tolerance rate of the algorithm.

The above-described gaze area is within the first area of the notification, including that all the determined gaze area is within the first area, or a predetermined percentage part of the determined gaze area is within the first area.

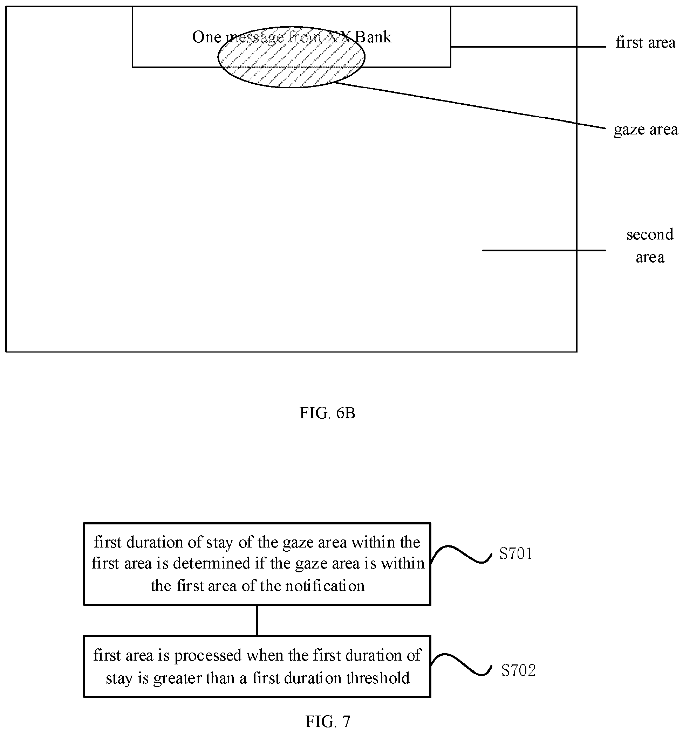

For example, FIG. 6A is a schematic diagram showing locations of the gaze area and the first area according to an embodiment of the present invention, in which case the gaze area is completely located in the first area. FIG. 6B is another schematic diagram showing locations of the gaze area and the first area according to an embodiment of the present invention, in which case the gaze area is partially located in the first area, which can also be regarded as that the user is interested in the notification to a certain extend and wants to know more about the specific content of the notification.

FIG. 7 is a schematic flowchart of another notification displaying method according to an embodiment of the present invention. As shown in FIG. 7, processing a first area of the notification if the gaze area is within the first area includes:
in step S701, a first duration of stay of the gaze area within the first area is determined if the gaze area is within the first area of the notification; and
in step S702, the first area is processed when the first duration of stay is greater than a first duration threshold.

The terminal can further determine a first duration of stay of the gaze area within the first area when the terminal determines that the gaze area is within the first area of the notification, it can be determined that the user is interested in the notification when the first duration of stay is greater than a first duration threshold, such that the first area can be processed, such as expanding the first area and/or displaying the specific content of the message in the first area, so as to meet the requirements of the user.

The notification can disappear normally if the user's gaze area is not in the first area of the notification.

If the duration of the user's gaze on the notification is longer, it means that the user is interested in the specific content of the notification, and thus further processing is needed; if the duration of the user's gaze on the notification is shorter, it indicates that the user is not interested in the notification or the content of the notification has been quickly acquired by the user, it is unnecessary to further process the first area; and the notification of the message can disappear normally according to the original program logic if the user's gaze area is not in the first area of the notification.

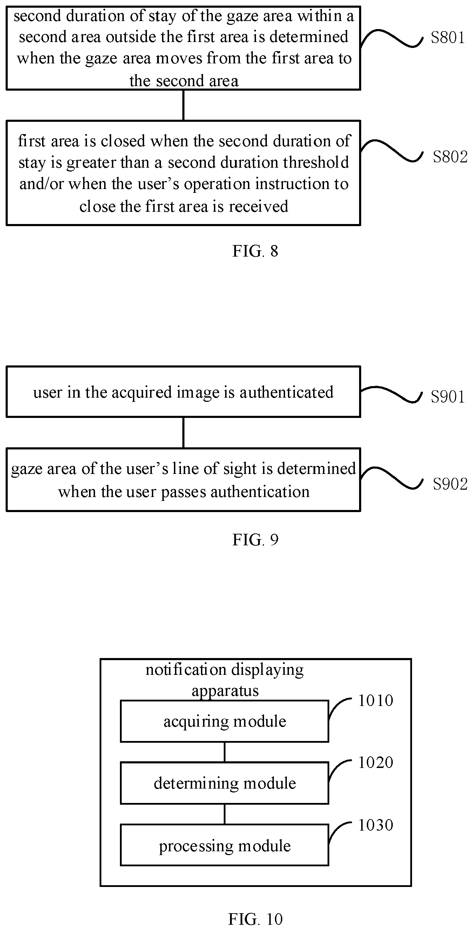

FIG. 8 is a schematic flowchart of another notification displaying method according to an embodiment of the present invention. As shown in FIG. 8, the method further includes:
in step S801, a second duration of stay of the gaze area within a second area outside the first area is determined when the gaze area moves from the first area to the second area; and
in step S802, the first area is closed when the second duration of stay is greater than a second duration threshold and/or when the user's operation instruction to close the first area is received.

A second duration of stay of the gaze area within a second area outside the first area can be determined when the gaze area moves from the first area to the second area, and the first area is closed when the second duration of stay is greater than a second duration threshold and/or when the user's operation instruction to close the first area is received, wherein the operation instruction can be a double click instruction inputted to the second area, a command of left stroke and upward drag on the first area, or a command of continuous eye blinking of the user based on the face recognition algorithm, and the user can choose an appropriate method to close the first area according to his/her own requirements. Herein, the second area is an area outside the first area, as shown in, for example, FIGS. 2A, 2B, 6A and 6B. The user can close the first area in time after learning the specific message content of the notification, so as to avoid the notification from blocking the display screen for a long time.

It should be noted that if the first area of the notification is expanded due to the user's gaze, at this time, the terminal can adopt another set of gaze area classification algorithm corresponding to the expanded first area to determine the relationship between the gaze area and the expanded first area, and then realize the determination that the gaze area moves from the first area to the second area after the first area is expanded.

FIG. 9 is a schematic flowchart of another notification displaying method according to an embodiment of the present invention. As shown in FIG. 9, the determining a gaze area of a user's line of sight in the acquired image includes:
in step S901, the user in the acquired image is authenticated; and
in step S902, the gaze area of the user's line of sight is determined when the user passes authentication.

The user in the acquired image can be authenticated, and the gaze area of the user's line of sight can be determined when the user passes authentication. After the image is acquired by the front image acquisition device, the terminal can identify all the faces in the image that exceed a certain size, and verify with faces stored in advance, and the gaze area of the user's line of sight is determined if verification is passed, where the faces stored in advance can be a plurality of user face information independently set by the user for the notification displaying method, or face data stored in advance by other face verifications of the terminal can be directly invoked. When the face in the acquired image exceeds a certain size, it can be considered that the user corresponding to the face can clearly see the content displayed by the terminal, and thus it is necessary to verify the user identity corresponding to the face in order to avoid some of the user's private or important information from being peeped by others.

When there is any user in the acquired image who fails to pass authentication, the content in the notification can be displayed in an encrypted way, the entire content in the notification can be displayed in the encrypted way, or partial content in the notification can be displayed in the encrypted way, for example, all the information related to time, money and numbers in the notification can be displayed in the encrypted way, so as to avoid the unauthenticated user from peeping the notification content.

The notification displaying method can be implemented based on the user's personalized configuration. For example, the user can customize the first duration threshold and the second duration threshold in the above embodiments to closely match his/her own habit of reading notifications; and it is also possible to set up an encryption setting for the notifications of a part of applications, such that the terminal executes the method of the above embodiments of encrypted display merely when the part of applications with the setting are received.

Expanding the first area can include: expanding the first area by a first ratio in a lateral direction, and expanding the first area by a second ratio in a longitudinal direction, where the first ratio is smaller than the second ratio, such that the first area is expanded more in the longitudinal direction, so as to show more content in the message in the longitudinal direction of the screen of the terminal and facilitate the user browsing the message.

It should be noted that for screens with different sizes, the size of the first area and the size of the expanded first area can be changed according to different screens, and can be set specifically as required.

The first ratio can be 5% to 20% and the second ratio is preferably 100% to 200%, for example, the first ratio is 20% and the second ratio is 200%.

Optionally the terminal is running other applications, the terminal is running a live broadcast application, the display area of the live broadcast application includes a background area, and the expanded first area is displayed in the background area; or,

the terminal is running a multimedia playing application, the display area of the multimedia playing application includes a playlist area, and the expanded first area is displayed in the playlist area.

When the user is using other applications on the terminal, the display area of the application can include the area that the user mainly pays attention to and the area that the user pays less attention to.

For example, the user is watching a live broadcast using a live broadcast application, and the screen of the live broadcast application can include an anchor area, an interactive area, a background area, etc. By making statistics of the viewing habits of the user, it can be known that the user mainly pays attention to the anchor area and the interactive area, while paying less attention to the background area. Then the expanded first area can be displayed in the background area, to avoid blocking the area that the user mainly pays attention to, which is beneficial to improve the use experience. Herein, distinguishing various areas in the live broadcast application screen can be realized based on algorithms in the related technologies and no details are repeated in the present invention.

For example, the user is using a multimedia application, where a multimedia playing application includes but not limited to a video playing application, a picture playing application and an audio playing application. Taking the video playing application as an example, the screen of the video playing application can include a playing picture area, a playlist area, etc. According to statistics of the user's viewing habits, the user is mainly concerned with the playing picture area, but pay less attention to the playlist area, then the expanded first area can be displayed in the playlist area, to avoid blocking the area that the user is mainly concerned about, which is beneficial to improve the use experience. Herein, distinguishing various areas in the multimedia playing application screen can be realized based on algorithms in the related technologies, and no details are repeated in the present invention.

The expanded first area can be provided with a sidebar, and the user can control the scrolling of the expanded first area by dragging the sidebar up and down, so as to view the complete content of the message.

Optionally the expanded first area includes a first sub-area and a second sub-area, where the message is controlled to scroll in the expanded first area when the gaze area is located in the second sub-area. Accordingly, the user can control the message to scroll in the expanded first area by adjusting the gaze area, such that the user can view the whole content of the message.

For example, the first sub-area is the area near the top of the screen in the expanded first area, and the second sub-area is the area near the bottom of the screen in the expanded first area.

Corresponding to the above-described examples of the notification displaying method, the present invention also provides exemplary embodiments of a notification display apparatus.

FIG. 10 is a schematic block diagram of a notification displaying apparatus according to an embodiment of the present invention. The notification displaying apparatus shown in this embodiment can be a terminal or an apparatus composed of modules in the terminal, and the terminal includes but not limited to a communication apparatus such as a mobile phone, a tablet computer, a wearable device, a sensor and an Internet of Things device.

As shown in FIG. 10, the apparatus is applied to a terminal, and a front image acquisition device is disposed in the terminal, and the apparatus includes:
an acquiring module 1010 configured to acquire an image through the front image acquisition device when the terminal displays a notification of the received message;
a determining module 1020 configured to determine a gaze area of a user's line of sight in the acquired image; and
a processing module 1030 configured to process a first area of the notification when the gaze area is within the first area, where modes of the processing include expanding the first area and/or displaying a specific content of the message in the first area.

Optionally, the first area includes a display area of the notification, or the first area includes a display area of the notification and a buffer area around the display area.

Optionally, the processing module is configured to determine a first duration of stay of the gaze area within the first area when the gaze area is within the first area of the notification; and process the first area when the first duration of stay is greater than a first duration threshold.

Optionally, the processing module is further configured to determine a second duration of stay of the gaze area within a second area outside the first area when the gaze area moves from the first area to the second area; and close the first area when the second duration of stay is greater than a second duration threshold and/or when the user's operation instruction to close the first area is received.

Optionally, the determining module is configured to authenticate the user in the acquired image; and determine the gaze area of the user's line of sight when the user passes authentication.

Optionally, the apparatus further includes an encryption module configured to encrypted-display the content in the notification when the user fails to pass authentication.

Optionally, the processing module is configured to expand the first area by a first ratio in a lateral direction and expand the first area by a second ratio in a longitudinal direction, where the first ratio is smaller than the second ratio.

Optionally, the terminal is running other applications, the terminal is running a live broadcast application, a display area of the live broadcast application includes a background area, and the expanded first area is displayed in the background area; or, the terminal is running a multimedia playing application, a display area of the multimedia playing application includes a playlist area, and the expanded first area is displayed in the playlist area.

Optionally, the expanded first area includes a first sub-area and a second sub-area, where the message is controlled to scroll in the expanded first area when the gaze area is located in the second sub-area.

With regard to the apparatus in the above embodiments, the specific ways in which respective modules perform operations have been described in detail in the embodiments of related methods, and details will not be repeated here.

For the apparatus embodiments, because they basically correspond to the method embodiments, as for related parts, reference can be made to the description parts of the method embodiments. The apparatus embodiments described above are only schematic, where the modules described as separate components may or may not be physically separated, and the components displayed as modules may or may not be physical modules, namely, they may be located in one place or distributed to multiple network modules. Some or all of the modules can be selected according to actual requirements to achieve the purpose of the solutions of the present invention. Those of ordinary skill in the art can understand and implement without paying creative work.

The embodiments of the present invention further provide an electronic device, including a processor; a memory for storing processor-executable instructions; where the processor is configured to implement the method described in any of the above embodiments.

Embodiments of the present invention further provide a computer-readable storage medium, having stored thereon a computer program which, when executed by a processor, realizes the steps in the method described in any of the above embodiments.

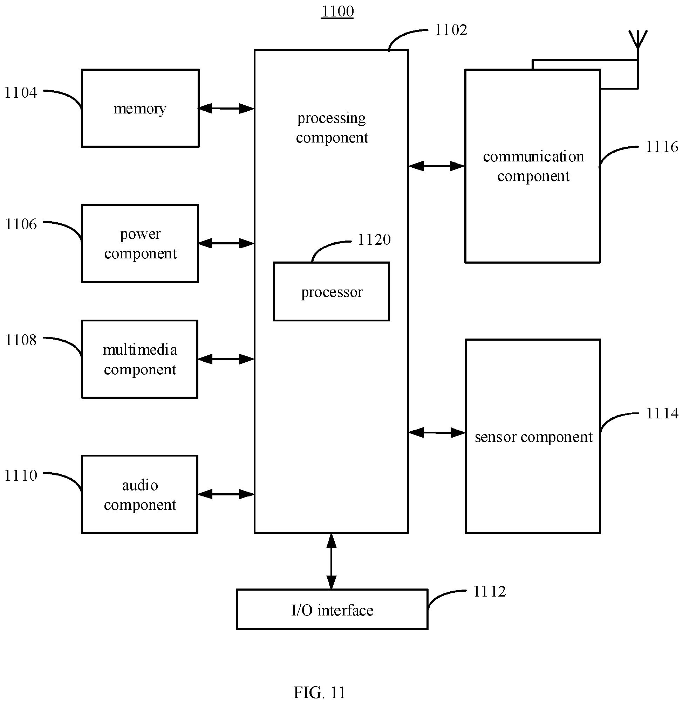

FIG. 11 is a schematic block diagram of an apparatus 1100 for notification displaying according to an exemplary embodiment of the present invention. For example, the apparatus 1100 can be a mobile phone, a computer, a digital broadcast terminal, a messaging device, a gaming console, a tablet, a medical device, exercise equipment, a personal digital assistant, and the like.

Referring to FIG. 11, the apparatus 1100 can include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the apparatus 1100, such as the operations associated with display, telephone calls, data communications, camera operations, and recording operations. The processing component 1102 can include one or more processors 1120 to execute instructions to perform all or part of the steps in the above described methods. Moreover, the processing component 1102 can include one or more modules which facilitate the interaction between the processing component 1102 and other components. For instance, the processing component 1102 can include a multimedia module to facilitate the interaction between the multimedia component 1108 and the processing component 1102.

The memory 1104 is configured to store various types of data to support the operation of the apparatus 1100. Examples of such data include instructions for any applications or methods operated on the apparatus 1100, contact data, phonebook data, messages, pictures, video, etc. The memory 1104 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the apparatus 1100. The power component 1106 can include a power management system, one or more power sources, and any other components associated with the generation, management, and distribution of power in the apparatus 1100.

The multimedia component 1108 includes a screen providing an output interface between the apparatus 1100 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 1108 includes a front camera and/or a rear camera. The front camera and the rear camera can receive an external multimedia datum while the apparatus 1100 is in an operation mode, such as a photographing mode or a video mode. Each of the front camera and the rear camera can be a fixed optical lens system or have focus and optical zoom capability.

The audio component 1110 is configured to output and/or input audio signals. For example, the audio component 1110 includes a microphone ("MIC") configured to receive an external audio signal when the apparatus 1100 is in an operation mode, such as a call mode, a recording mode, and a voice recognition mode. The received audio signal can be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons can include, but are not limited to, a home button, a volume button, a starting button, and a locking button.

The sensor component 1114 includes one or more sensors to provide status assessments of various aspects of the apparatus 1100. For instance, the sensor component 1114 can detect an open/closed status of the apparatus 1100, relative locating of components, e.g., the display and the keypad, of the apparatus 1100, a change in position of the apparatus 1100 or a component of the apparatus 1100, a presence or absence of user contact with the apparatus 1100, an orientation or an acceleration/deceleration of the apparatus 1100, and a change in temperature of the apparatus 1100. The sensor component 1114 can include a proximity sensor configured to detect the presence of nearby objects without any physical contact. The sensor component 1114 can also include a light sensor, such as a CMOS or CCD image sensor, for use in imaging applications. In some embodiments, the sensor component 1114 can also include an accelerometer sensor, a gyroscope sensor, a magnetic sensor, a pressure sensor, or a temperature sensor.

The communication component 1116 is configured to facilitate communication, wired or wirelessly, between the apparatus 1100 and other devices. The apparatus 1100 can access a wireless network based on a communication standard, such as Wi-Fi, 2G, 3G, 4G LTE, 5G NR or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1100 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described locating methods of the electronic device.

In exemplary embodiments, there is also provided a non-transitory computer-readable storage medium including instructions, such as included in the memory 1104, executable by the processor 1120 in the apparatus 1100, for performing the above described locating methods of the electronic device. For example, the non-transitory computer-readable storage medium can be a ROM, a RAM, a CD-ROM, a magnetic tape, a floppy disc, an optical data storage device, and the like.

Other embodiments of the present invention can be available to those skilled in the art upon consideration of the description and practice of the various embodiments disclosed herein. The present application is intended to cover any variations, uses, or adaptations of the present invention following general principles of the present invention and including the common general knowledge or conventional technical means in the art. The description and embodiments are considered as illustrative only.

It will be understood that the present invention is not limited to the exact construction that has been described above and illustrated in the accompanying drawings, and that various modifications and changes can be made without departing from the scope thereof. It is intended that the scope of the present invention is limited by the appended claims.

## Claims

1. A notification displaying method, executed by a terminal in which a front image acquisition device is disposed, the method comprising:
acquiring (S101) an image through the front image acquisition device when a notification of a received message is displayed;
determining (S102) a gaze area of a user's line of sight in the acquired image; and
processing (S103) a first area of the notification if the gaze area is within the first area, wherein modes of the processing comprise expanding the first area and/or displaying a specific content of the message in the first area.

2. The method according to claim 1, wherein the first area comprises a display area of the notification, or the first area comprises a display area of the notification and a buffer area around the display area.

3. The method according to claim 1 or 2, wherein the processing a first area of the notification if the gaze area is within the first area comprises:
determining (S701) a first duration of stay of the gaze area within the first area if the gaze area is within the first area of the notification; and
processing (S702) the first area when the first duration of stay is greater than a first duration threshold.

4. The method according to any of claim 1-3, wherein the method further comprises:
determining (S801) a second duration of stay of the gaze area within a second area outside the first area when the gaze area moves from the first area to the second area; and
closing (S802) the first area when the second duration of stay is greater than a second duration threshold and/or when the user's operation instruction to close the first area is received.

5. The method according to any of claim 1-4, wherein the determining a gaze area of a user's line of sight in the acquired image comprises:
authenticating (S901) the user in the acquired image; and
determining (S902) the gaze area of the user's line of sight when the user passes the authentication.

6. The method according to claim 5, further comprising:
encrypted-displaying the content in the notification when the user fails to pass the authentication.

7. The method according to any one of claims 1 to 6, wherein the expanding the first area comprises:
expanding the first area by a first ratio in a lateral direction, and expanding the first area by a second ratio in a longitudinal direction, wherein the first ratio is smaller than the second ratio.

8. The method according to any one of claims 1 to 7, wherein the terminal is running a live broadcast application, a display area of the live broadcast application comprises a background area, and the expanded first area is displayed in the background area; or,
the terminal is running a multimedia playing application, a display area of the multimedia playing application comprises a playlist area, and the expanded first area is displayed in the playlist area.

9. The method according to any one of claims 1 to 8, wherein the expanded first area comprises a first sub-area and a second sub-area, wherein the message is controlled to scroll in the expanded first area when the gaze area is located in the second sub-area.

10. A notification displaying apparatus, applied to a terminal in which a front image acquisition device is disposed, the apparatus comprising:
an acquiring module (1010) configured to acquire an image through the front image acquisition device when the terminal displays a notification of a received message;
a determining module (1020) configured to determine a gaze area of a user's line of sight in the acquired image; and
a processing module (1030) configured to process a first area of the notification when the gaze area is within the first area, wherein modes of the processing comprise expanding the first area and/or displaying a specific content of the message in the first area.

11. The apparatus according to claim 10, wherein the first area comprises a display area of the notification, or the first area comprises a display area of the notification and a buffer area around the display area.

12. The apparatus according to claim 10 or 11, wherein the processing module (1030) is further configured to:
determine a first duration of stay of the gaze area within the first area if the gaze area is within the first area of the notification; and
process the first area when the first duration of stay is greater than a first duration threshold.

13. The apparatus according to any of claims 10-12, wherein the processing module (1030) is further configured to:
determine a second duration of stay of the gaze area within a second area outside the first area when the gaze area moves from the first area to the second area; and
close the first area when the second duration of stay is greater than a second duration threshold and/or when the user's operation instruction to close the first area is received.

14. The apparatus according to any of claims 10-13, wherein the determining module (1020) is further configured to:
authenticate the user in the acquired image; and
determine the gaze area of the user's line of sight when the user passes the authentication.

15. A computer-readable storage medium, having stored thereon a computer program, which, when executed by a processor, implements the notification displaying method according to any of claims 1 to 9.
